(19) Europäisches Patentamt
European Patent Office
Office européen des brevets

(11) **EP 3 812 218 B1**

(12) **EUROPEAN PATENT SPECIFICATION**

(45) Date of publication and mention of the grant of the patent:
**11.03.2026 Bulletin 2026/11**

(21) Application number: **19791479.9**

(22) Date of filing: **30.01.2019**

(51) International Patent Classification (IPC):
**B60R 16/02** (2006.01)     **G01M 17/007** (2006.01)
**G08G 1/00** (2006.01)

(52) Cooperative Patent Classification (CPC):
**G07C 5/0808; B60R 16/0234; G07C 5/085; G08G 1/0112; G08G 1/0133**

(86) International application number:
**PCT/JP2019/003156**

(87) International publication number:
**WO 2019/207882 (31.10.2019 Gazette 2019/44)**

(54) **INDICATION DIAGNOSIS DEVICE AND METHOD**

VORRICHTUNG UND VERFAHREN ZUR INDIKATIONSDIAGNOSE

DISPOSITIF ET PROCÉDÉ DE DIAGNOSTIC D'INDICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2018 JP 2018082844**

(43) Date of publication of application:
**28.04.2021 Bulletin 2021/17**

(73) Proprietor: **Hitachi, Ltd.**
**Tokyo 100-8280 (JP)**

(72) Inventors:
• **ZHANG Zixian**
 **Tokyo 100-8280 (JP)**
• **MUTO Kazuo**
 **Tokyo 100-8280 (JP)**
• **OKUDE Mariko**
 **Tokyo 100-8280 (JP)**
• **NISHIDA Takehisa**
 **Tokyo 100-8280 (JP)**
• **ISHIKAWA Masayoshi**
 **Tokyo 100-8280 (JP)**

(74) Representative: **Strehl & Partner mbB**
**Maximilianstrasse 54**
**80538 München (DE)**

(56) References cited:
WO-A1-2017/160201     JP-A- 2004 272 375
JP-A- 2006 027 545     JP-A- 2015 102 883
US-A1- 2007 260 374     US-A1- 2011 015 823
US-A1- 2012 065 834     US-A1- 2016 017 574
US-A1- 2017 358 154

## Description

Technical Field

The present invention relates to an abnormality sign diagnosis apparatus and an abnormality sign diagnosis method for diagnosing abnormality signs of equipment.

Background Art

In operating various kinds of equipment, it is preferable to grasp degrees of their deterioration and to diagnose their abnormality signs before they actually fail in view of the need for maintaining safety or performance levels. The diagnosis of abnormality signs of a motor vehicle as typical equipment is important for ensuring its safety. As a recent trend in the vehicles, some devices have started to be introduced to improve the safety of vehicle users. However, additional costs involved have thwarted the popularization of such devices.

Meanwhile, the surge in physical distribution and expansion of the car-sharing business tend to increase the operating time of both commercial and private vehicles. Thus it is more necessary than ever to monitor the status of the vehicles and detect their abnormality as soon as possible so as to notify drivers, car dealers, transport companies, and fleet management companies of the findings.

There exist techniques for diagnosing abnormality signs using CAN data and OBD data. These prediction techniques involve using measurement data such as CAN data and OBD data on the operating time of vehicles to detect equipment abnormality from the difference between previously acquired data on the vehicle in normal driving on one hand and the measurement data on the vehicle at a time targeted for diagnosis on the other hand.

Patent Document 1 cited below describes failure diagnosis that involves comparing driving data on multiple parameters stored in an electronic control unit (ECU) of a vehicle upon failure with reference values constituted by driving data at normal time.

The document WO 2017/160201 AI relates to the automatized visual inspection using cameras or other kinds of sensors. In one aspect, the data of a camera inspecting the surroundings of the vehicle is used to detect implausibility in a digital map used in a navigator.

The document US 2007/260374 AI discloses a method for identifying trends in operating parameters of an airplane, wherein the method includes comparing measured data with projected data.

Further related art is disclosed in US 2017/358154 A1 and US 2012/065834 A1.

**Prior Art Document**

**Patent Document**

Patent Document 1: JP-2010-137644-A

Non-Patent Document

Non-Patent Document 1: "Abnormality Detection using Machine Learning" by Tsuyoshi Ide, published by CORONA PUBLISHING CO.,LTD., Aug. 2014

Summary of Invention

Problem to be Solved by the Invention

With the above-mentioned existing techniques, it has been difficult to detect abnormality accurately by comparison with normal data if the surrounding environment and status of the vehicle in driving are different. As an example, in the case of detecting abnormality in the brake system of the vehicle, it is difficult to make accurate detection if the status in which the brake system is activated does not match. For instance, depending on the location, on the weather, or on the traffic conditions at which the brake is activated, the behavior resulting from similar activation of the brake may vary, which makes appropriate detection difficult.

In view of the above, the present invention aims to provide an abnormality sign diagnosis apparatus and an abnormality sign diagnosis method for enabling more accurate predictive abnormality detection by comparison between the behaviors having taken place in similar environments.

Means for Solving the Problem

Thus the present invention provides "an abnormality sign diagnosis apparatus as defined in independent claim 1, that uses measurement data on equipment in operation to find a difference between previously acquired data on the equipment in normal operation and the measurement data on the equipment at a time targeted for diagnosis so as to detect abnormality of the equipment, the abnormality sign diagnosis apparatus including: input means that inputs the measurement data on the equipment in operation and a surrounding environment and status of the equipment in operation; storage means that stores the data on the equipment in normal operation; and processing means that selects from the storage means the data on the equipment in normal operation in a surrounding environment and status of the equipment, the surrounding environment and the status being similar to the surrounding environment and the status of the equipment at a time which is targeted for diagnosis and at which the data on the equipment in normal operation has been measured, the processing means further detecting abnormality of the equipment using the data on the equipment in normal operation at the time targeted for diagnosis and the data on the equipment in normal operation selected from the storage means."

The present invention also provides "an abnormality sign diagnosis method as defined in independent claim 7, that uses measurement data on equipment in operation to find a difference between previously acquired data on the equipment in normal operation and the measurement data on the equipment at a time targeted for diagnosis so as to detect abnormality of the equipment, the abnormality sign diagnosis method including: by a processing means, obtaining the measurement data on the equipment in operation and a surrounding environment and status of the equipment in operation; storing the data on the equipment in normal operation; and using the data on the equipment in normal operation at a time targeted for diagnosis and previously stored data on the equipment in normal operation in a surrounding environment and status of the equipment, the surrounding environment and the status being similar to the surrounding environment and the status of the equipment at the time at which the data on the equipment in normal operation has been measured, so as to detect abnormality of the equipment."

Advantageous of the Invention

According to the present invention, it is possible to detect abnormality more accurately by comparison with previously acquired data in the matching status in which the brake has been activated, for example.

Brief Description of the Drawings

FIG. 1 is a view depicting a hardware configuration example of a vehicle abnormality sign diagnosis apparatus according to a first embodiment of the present invention.
FIG. 2 is a view depicting a software configuration example of the vehicle abnormality sign diagnosis apparatus according to the first embodiment of the present invention.
FIG. 3 is a view depicting examples of an external input section 110 and an external output section 120.
FIG. 4 is a view depicting a format example of mobile terminal and network data D0.
FIG. 5 is a view depicting a vehicle travel physical model in an operation database DB.
FIG. 6 is a view depicting an empirical model in the operation database DB.
FIG. 7 is a flowchart depicting details of processing performed by a data processing section 150.
FIG. 8 is a view depicting an example of previously processed driving data D4.
FIG. 9 is a flowchart depicting details of processing performed by a similar external environment detection section 160.
FIG. 10 is a view depicting an example of output data D5 from the similar external environment detection section 160.
FIG. 11 is a view explaining the concept of an abnormal state detection section 170.
FIG. 12 is a view depicting an input screen of a vehicle abnormality sign diagnosis tool.
FIG. 13 is a view depicting an output screen of the vehicle abnormality sign diagnosis tool.
FIG. 14 is a view depicting an input section and an output section of a second embodiment of the present invention.

Modes for Carrying Out the Invention

Some embodiments of the present invention are described below in detail with reference to the accompanying drawings.

First embodiment

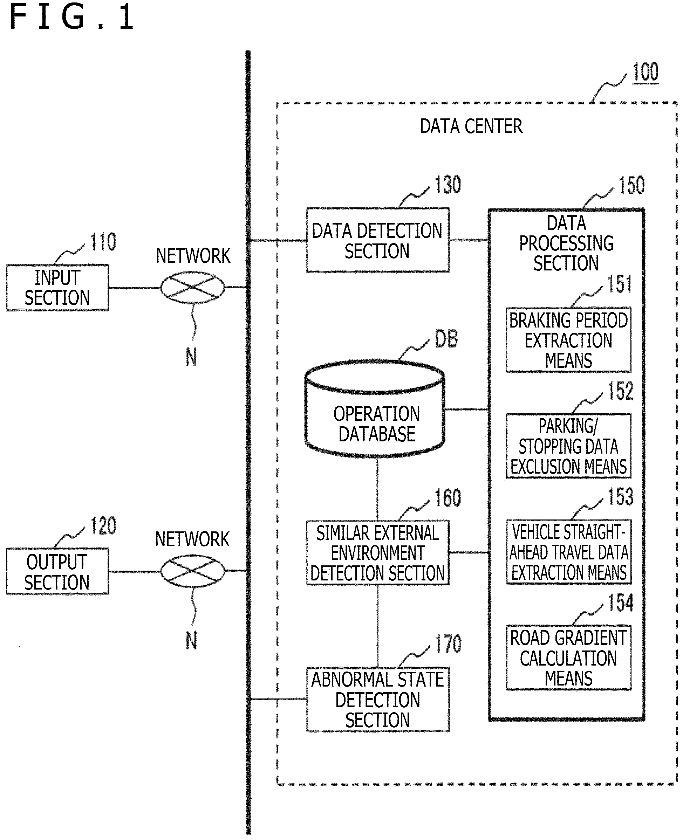

FIG. 1 depicts a hardware configuration example of a vehicle abnormality sign diagnosis apparatus according to a first embodiment of the present invention. A vehicle abnormality sign diagnosis apparatus 100 of the present invention is configured with a computer system. The vehicle abnormality sign diagnosis apparatus 100 is formed inside a data center that communicates with an external input section 110 and with an external output section 120 via a network N.

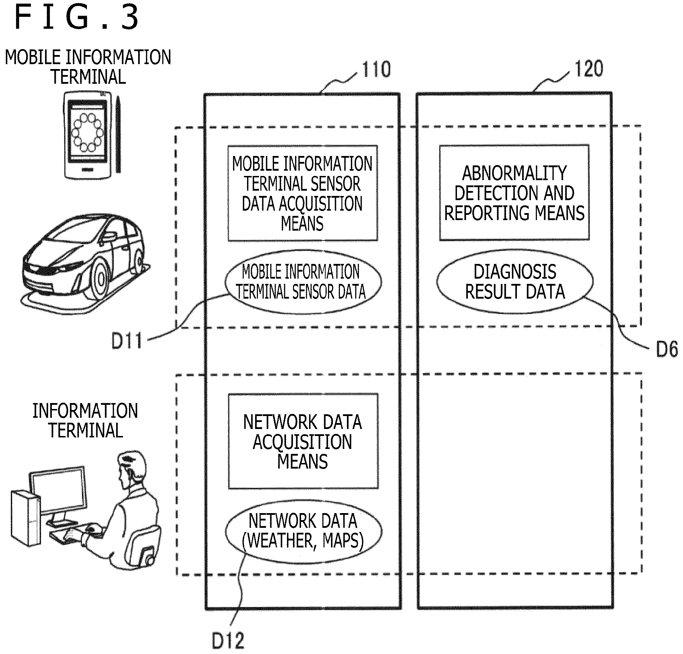

Of the constituent elements in FIG. 1, examples of the input section 110 and output section 120 external to the data center are depicted in FIG. 3. The input section 110 and output section 120 outside the data center may be in a mobile information terminal inside the vehicle, for example. The input section 110 may alternatively be a stationary information terminal.

The mobile information terminal in the vehicle includes mobile information terminal sensor data acquisition means for acquiring sensor data such as velocity, acceleration, and GPS data from sensors installed inside the vehicle. The mobile information terminal in the vehicle outputs mobile information terminal sensor data D11 thus acquired. The mobile information terminal in the vehicle further includes abnormality detection and reporting means for displaying and reporting, inside the vehicle, diagnostic result data transmitted from the vehicle abnormality sign diagnosis apparatus 100. Some of the functions implemented by the mobile information terminal may be executed by a mobile terminal carried by a passenger on the vehicle.

As part of the input section 110, the stationary information terminal may be an information terminal installed at a meteorological observatory, for example. The stationary information terminal acquires data such as weather and map data on the environment external to the vehicle, and transmits the acquired data as network data D12 via the network N. The information terminal includes network data acquisition means for data acquisition and transmission purposes.

Returning to FIG. 1, the vehicle abnormality sign diagnosis apparatus 100 is configured using an arithmetic section and a database of a computer apparatus. A data processing section 150 constituting the arithmetic section is configured, functionally, with braking period extraction means 151, parking/stopping data exclusion means 152, vehicle straight-ahead travel data extraction means 153, and road gradient calculation means 154. An operation database DB is provided as the database. In addition, the vehicle abnormality sign diagnosis apparatus 100 in FIG. 1 includes various detection sections such as a data detection section 130, a similar external environment detection section 160, and an abnormal state detection section 170. The data detection section 130, similar external environment detection section 160, and abnormal state detection section 170 may alternatively be considered as, and configured as, part of the arithmetic section.

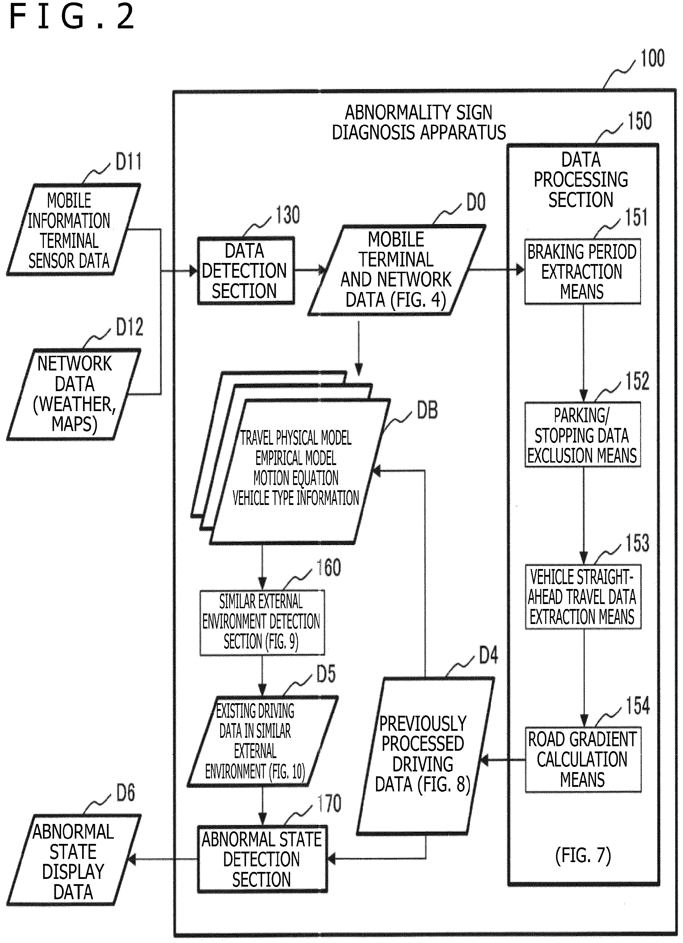

Whereas the vehicle abnormality sign diagnosis apparatus 100 in FIG. 1 is described from a hardware configuration point of view centering primarily on processing functions, FIG. 2 depicts the vehicle abnormality sign diagnosis apparatus 100 from a software point of view covering processing procedures.

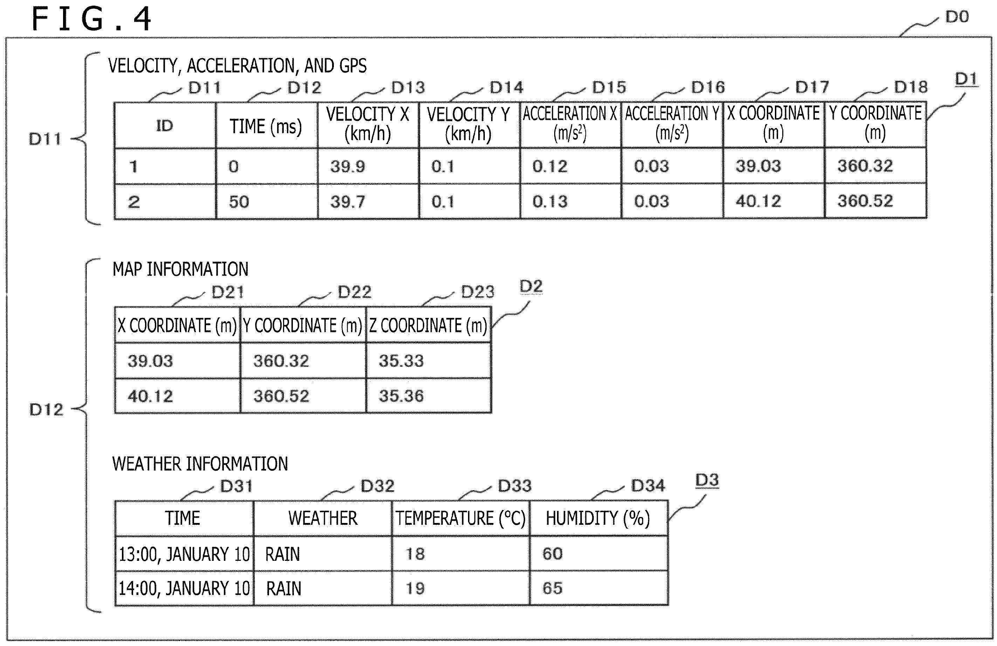

In FIG. 2, the data detection section 130 forms the data sent from the external input section 110 (mobile information terminal sensor data D11 and network data D12) into a predetermined format and outputs the formatted data. The format will be discussed later with reference to FIG. 4. In FIG. 2, the mobile terminal and network data D0 is formed in this format. The formatted mobile terminal and network data D0 is used by the data processing section 150, to be discussed later, and is stored as needed in the operation dataset DB.

The braking period extraction means 151 in the data processing section 150 extracts, from the mobile terminal and network data D0 output by the data detection section 130, the mobile information terminal sensor data D11 corresponding solely to the period in which the brake is activated, on the basis of an empirical model stored in the operation database DB. The empirical model here is a model for determining whether the vehicle is decelerating, i.e., whether the brake is activated, in accordance with a motion equation of the vehicle. The empirical model will be discussed later in detail.

The parking/stopping data exclusion means 152 excludes the data on the vehicle during parking and stopping by searching for zero-velocity data through vehicle velocity data. Here, the data other than the data on the vehicle in driving, such as the data on the vehicle during parking and stopping, is excluded as unnecessary data because current and past operations in normal driving are targeted for comparison.

The vehicle straight-ahead travel data extraction means 153 extracts only the data on the vehicle traveling straight based on vehicle velocity data and vehicle acceleration data included in the mobile information terminal sensor data D11 by excluding the data on the vehicle turning right or left. In the first embodiment, the straight-ahead travel data is extracted because an empirical model is created from a straight-ahead driving equation. If there is an empirical model taking vehicle turns into consideration, the extraction of the straight-ahead travel data may be omitted.

The road gradient calculation means 154 performs road gradient calculations using vehicle GPS information included in the mobile information terminal sensor data D11.

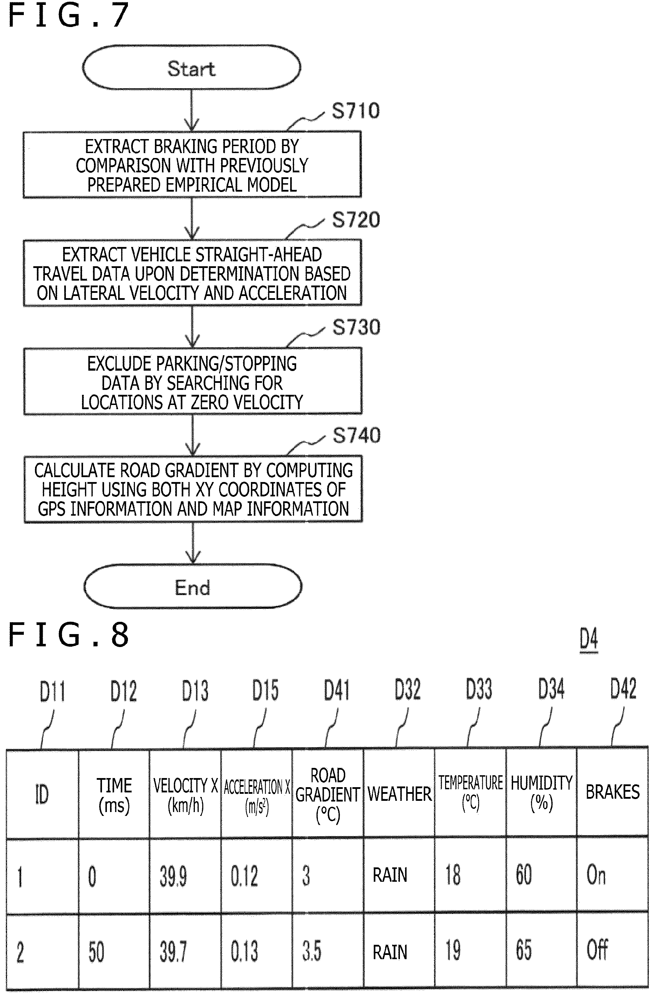

The above-described series of processing by the data detection section 130 or by the data processing section 150 is carried out repeatedly in the computer system. The result of the processing, every time the processing takes place with the vehicle in driving, is obtained as previously processed driving data D4. The previously processed driving data D4 is stored successively into the operation database DB. The previously processed driving data D4 will be discussed later with reference to FIG. 8.

The previously processed driving data D4 immediately after shipment of the vehicle from the factory or immediately after subsequent periodical maintenance of the vehicle may be said to be what is known as training data on the vehicle in the normal state. On the other hand, the previously processed driving data D4 obtained after driving time reflects the vehicle in the current state. There is thought to be an increasing difference between the training data and the current-state data.

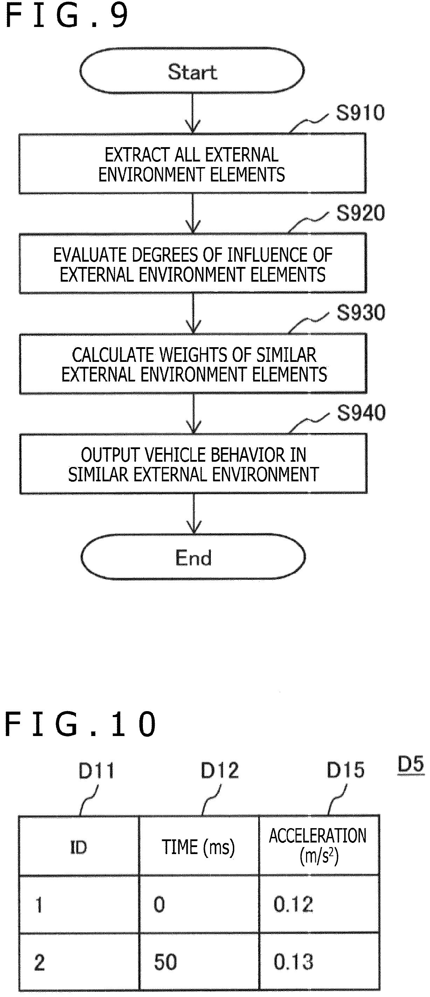

The similar external environment detection section 160 focuses on the external environment data from among the network data D12 stored consecutively into the operation database DB. The similar external environment detection section 160 extracts two kinds of data: existing driving data D5 as past data in an external environment similar to the current external environment (previously processed driving data D4 at a past point in time), and the most recent previously processed driving data D4. Details of the processing by the similar external environment detection section 160 will be discussed later with reference to FIG. 9. An example of the existing driving data D5 in a similar external environment will be discussed later with reference to FIG. 10.

The abnormal state detection section 170 detects an abnormal state by comparing the previously processed driving data D4 in the current state with the previously processed driving data D4 in the past, both data being from similar environments. The result of the detection is output by the output section 120 as abnormal state display data D6. As depicted in FIG. 3, the output section 120 is a mobile information terminal that incorporates abnormality detection and reporting means. The abnormality detection and reporting means displays and reports diagnostic result data inside the vehicle.

What follows is a detailed explanation of the processing according to the present invention on the basis of specific data examples. In a typical data flow in FIG. 2, the data detection section 130 first receives input of the mobile information terminal sensor data D11 and network data D12. The data detection section 130 forms the two kinds of data altogether into mobile terminal and network data D0 in a predetermined format and outputs the formatted mobile terminal and network data D0.

FIG. 4 depicts a format example of the mobile terminal and network data D0. The mobile terminal and network data D0 is configured with the mobile information terminal sensor data D11 from the mobile information terminal in the vehicle and the network data D12 from an information terminal set up typically at a meteorological observatory regarding the weather and maps. The mobile information terminal sensor data D11 is configured with "velocity, acceleration, and GPS" data D1, while the network data D12 is configured with "map information" data D2 and "weather information" data D3. These items of data are identified by being associated with one another using data acquisition timestamps attached thereto, for example.

Of these items of data, the "velocity, acceleration, and GPS" data D1 is configured with a velocity X (D13), a velocity Y (D14), acceleration X (D15), acceleration Y (D16), an X coordinate (D17), and a Y coordinate (D18) of the vehicle at a given time interval D12. The velocity X (D13) is the velocity of the vehicle traveling straight ahead. The velocity Y (D14) is the velocity of the vehicle traveling laterally. The acceleration X (D15) is the acceleration of the vehicle traveling straight ahead. The acceleration Y (D16) is the acceleration of the vehicle traveling laterally. The data with a given timestamp is provided with an ID (D11) starting from 1.

The times are given in units of ms. The times that have elapsed from the beginning are written. The velocities are given in units of km/h and written as one-dimensional data strings. The acceleration is given in units of $m/s^2$ and written as a positive one-dimensional data string when the vehicle accelerates and as a negative one-dimensional data string when the vehicle decelerates. The X and Y coordinates are data obtained from GPS and written as two-dimensional data strings indicative of longitude and latitude. For this apparatus, a reference location is determined in advance, and the distance of the vehicle from the reference location is calculated on the basis of longitude and latitude information. The X coordinate is in the longitude direction and the Y coordinate is in the latitude direction. The X and Y coordinates are given in units of m. It is to be noted that these units and coordinate arrangements are only examples. The formats of the data may be changed.

The "map information" data D2 is based on maps obtained from external data acquisition means of the information terminal. The maps constitute three-dimensional data and include longitude, latitude, and height information. As with GPS information, the data in the longitude direction and the data in the latitude direction are converted to an X coordinate D21 and a Y coordinate D22. The height information is written as a Z coordinate D23.

The "weather information" data D3 is based on weather information obtained from the external data acquisition means of the information terminal. The "weather information" data D3 includes time D31, weather D32, temperature D33, and humidity D34.

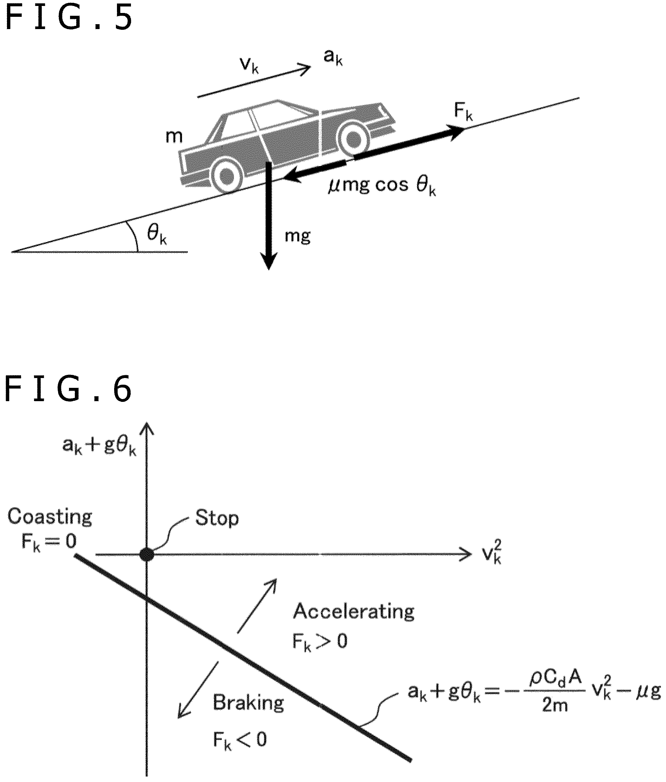

The operation database DB in FIGS. 1 and 2 stores a travel physical model, an empirical model, a motion equation, and vehicle type information, among others, regarding the vehicle. Of these items of information on the vehicle, the travel physical model is explained below with reference to FIG. 5. FIG. 5 depicts the state of the vehicle on a slope.

In FIG. 5, the character $\theta k$ stands for the road gradient at time k, m for the vehicle mass, vk for the velocity at time k, ak for the acceleration at time k, and Fk for the braking force at time k. The character $\mu$ denotes the coefficient of friction between the road and the wheels.

In FIG. 5, the motion equation of the vehicle is defined by the mathematical expression (1) below. In the expression (1), the character $\rho$ stands for the density of air, Cd for a drag coefficient, and A for a total projected area.

The mathematical expression (1) may be transformed into the mathematical expression (2) below. According to the expression (2), the acceleration ak is given as a linear function of the braking force Fk, the velocity squared $v_k^2$, and the road gradient θk at the same point in time. The motion equation and travel physical model in this case are stored in the operation database DB.

[Math. 1]

$$F_k = ma_k + \frac{\rho C_d A}{2} v_k^2 + \mu mg + mg\theta_k \qquad \cdots (1)$$

[Math. 2]

$$a_k = -\frac{\rho C_d A}{2m} v_k^2 + \frac{F_k}{m} - \mu g - g\theta_k \qquad \cdots (2)$$

The empirical model obtained from the travel physical model is explained with reference to FIG. 6. According to the mathematical expression (2) above, a line of the braking force Fk = 0 is created with the velocity squared $v_k^2$ on the horizontal axis and with ak + gθk on the vertical axis. Values above this line signify that the braking force is larger than zero, which is determined to be an accelerating state. Values below this line signify that the braking force is smaller than zero, which is a decelerating state brought about by operation of the brake pedal. This makes it possible to determine the braking state at a given point in time.

FIG. 7 is a flowchart depicting details of processing performed by the data processing section 150 in FIG. 1. The data processing section 150 performs preprocessing on the mobile terminal and network data D0, and outputs the previously processed driving data D4. The series of processing by the data processing section 150 is explained below with reference to the flowchart of FIG. 7.

In the first processing step S710 in the flowchart of FIG. 7, the braking period is extracted using the empirical model explained above with reference to FIG. 6. According to commonly practiced methods, the brake-activated state is measured using a brake pedal sensor and a brake fluid pressure sensor, among others, on the vehicle. According to the present invention, the data center outside the vehicle makes the determination using the mobile information terminal sensor data D11. That means there is no sensor data regarding the brakes.

For that reason, the braking period is extracted using the empirical model prepared beforehand in the operation database DB. Using the empirical model permits determination of the braking state at a given point in time. An aggregate of data on the braking states associated with the time of the determination constitutes the braking period. This makes it possible to extract the braking period.

In a processing step S720, vehicle straight-ahead travel data is extracted by determination based on the lateral velocity and acceleration. As depicted in FIG. 4, the mobile information terminal sensor data D11 retains velocity and acceleration sensor data (D13 to D16). The vehicle straight-ahead travel data is extracted by excluding the driving data of which the lateral velocity and acceleration are higher than designated threshold values.

In a processing step S730, parking/stopping data is excluded by searching for locations at zero velocity. In order to diagnose brake failure, the data on the use of the brake is effectively utilized. The other data is excluded. The mobile information terminal sensor data D11 depicted in FIG. 4 includes velocity data D13 and D14. The velocity data items include straight-ahead velocity and rotation velocity. The parking/stopping data is excluded using the straight-ahead velocity.

In a processing step S740, the road gradient is calculated by computing the height using the XY coordinates D17 and D18 of GPS information and the map information D2 in combination. The mobile information terminal sensor data D11 includes the GPS information as well as the XY coordinate data D17 and D18 indicative of longitude and latitude. Network data 220 includes the map information D2. The road gradient is calculated using both the GPS information and the map information.

FIG. 8 depicts an example of the previously processed driving data D4 obtained as a result of the series of processing in FIG. 7. This data sample is explained hereunder. The previously processed driving data D4 includes ID (D11), time D12, velocity D13, acceleration D15, road gradient D41, weather D32, temperature D33, humidity D34, and braking status D42. Of these data items, the road gradient D41 and braking status D42 are secondary information acquired by determination using the operation database DB. The other data items are the data selected as needed from the mobile terminal and network data D0 depending on given conditions (braking period, parking/stopping, straight-ahead travel, and the like).

The previously processed driving data D4 thus obtained is sent successively to the operation database DB for storage therein.

Next, the similar external environment detection section 160 uses as its input data the previously processed driving data D4 stored in the operation database DB. Given the input data, the similar external environment detection section 160 searches for and extracts existing operation data in a similar external environment as the existing driving data D5 in the similar external environment.

FIG. 9 is a flowchart depicting details of processing performed by the similar external environment detection section 160. In the first processing step S910, the similar external environment detection section 160 extracts all external environment elements from the previously processed driving data D4 of which the example is illustrated in FIG. 8. Here, the external environment elements signify the elements other than the vehicle behavior to be evaluated. For example, in the case where the acceleration of the vehicle is evaluated, the external environment elements include the weather condition D32 and road gradient D41 during vehicle travel, as well as initial and end velocities in the braking period.

For the present embodiment, the vehicle behavior and the external environment are indicated in FIG. 8. The acceleration D15 constitutes the vehicle behavior. The other data items including the velocity D13, road gradient D41, weather D32, temperature D33, and humidity D34 make up the external environment. The initial and end velocities in a single braking period are included in the external environment. These definitions vary depending on the abnormality sign diagnosis apparatus. These data items are prepared beforehand in the operation database DB.

In a processing step S920, the degrees of influence of the external environment elements are evaluated. Here, the operation database DB stores existing vehicle operation data, which is used to evaluate the degrees of influence of the external environment elements. The method of evaluation involves dividing the existing operation data into two groups A and B, extracting an appropriate braking period from the group A, and searching the group B for the most similar and the most dissimilar vehicle behaviors.

The method discussed in Non-Patent Document 1 may be adopted as the method for determining similarity. The method may be used to calculate the similarity between the acceleration time series data on two vehicle behaviors. In the case where the vehicle behaviors are similar and so are the external elements, the degree of influence is incremented by 1. In the opposite case, the degree of influence is decremented by 1. For example, a search is made through the group B for the most similar acceleration time series data T2 to the acceleration time series data T1 in a single braking period in the group A. The degrees of similarity are then evaluated between the external environment elements of the time series data T2 and those of the time series data T1. For example, in the case of initial velocity, the difference in initial velocity between the time series data T1 and the time series data T2 is written as an absolute value T12. A search is further made through the group B for the most dissimilar acceleration time series data T3 from the acceleration time series data T1. The difference in initial velocity between the data T1 and the data T3 is calculated as an absolute value T13. In the case where the absolute value T12 of the difference in initial velocity is larger than the absolute value T13, the degree of influence of the external environment element "initial velocity" is incremented by 1. In the case where the absolute value T12 is smaller than the absolute value T13, the degree of influence is decremented by 1. In the group A, the degrees of influence of all external environment elements are calculated using all braking periods.

In a processing step S930, similar external environment elements are selected. The external environment elements are arrayed in descending order of their degrees of influence. The elements whose degrees of influence are decremented are omitted. The external environment elements are then weighted in accordance with the degrees of their influence calculated in the processing step S920. For example, the weight is 1 for the external environment element with the highest degree of influence. The degrees of influence of the remaining external environment elements are calculated using the following mathematical expression (3):

[Math. 3] Weight = degree of influence of a given external environment element / the highest degree of influence ... (3)          (3)

In a processing step S940, the vehicle behavior in the similar external environment is output. A search is made for the most similar external environment using the weights calculated in the processing step S930. Because there are multiple external environment elements, the degrees of similarity of these external environment elements are evaluated using their individual weights. For example, if there are external environment elements A, B, and C, the degrees of similarity between two of these external environment elements are written as Sa, Sb, and Sc, and their weights are given as Wa, Wb, and Wc. The degree of similarity in this case is obtained by the following mathematical expression (4):

[Math. 4]

$$\text{Degree of similarity} = Wa*Sa + Wb*Sb + Wc*Sc$$

$$... \ (4)$$

The method for calculating the degrees of similarity Sa, Sb, and Sc of the external environment elements is explained here. In the previously processed driving data D4 in FIG. 8, the weather D32, which is an external environment element, is written as a character string such as rain or snow. The degree of similarity is given as 1 in the case where the character strings match and as 0 where the character strings fail to match.

Of the weather information as another external environment element, the temperature D33 and humidity D34 are displayed numerically. The difference between the values is obtained as an absolute value for evaluation. The degree of similarity is low in the case where the difference in absolute value is large, and is high where the difference in absolute value is small. All differences in absolute value are normalized to numerals ranging from 0 to 1 and written with Dif. The degree of similarity is calculated as 1-Dif.

The velocity D13, which is another external environment element, is a time series numerical string. The degree of similarity of this data item is calculated using the DTW method described in Non-Patent Document 1. The initial and end velocities in the braking period are numerically displayed, and calculated in the same manner as temperature and humidity.

After the degree of similarity of each external environment element is calculated, a search can be made for the most similar external environment to the external environment of test driving data. The vehicle behavior in the external environment resulting from the search is output. What is output by the present embodiment is the vehicle acceleration time series data in the most similar external environment.

FIG. 10 depicts an example of the output data D5 from the similar external environment detection section 160. The output data D5 represents the vehicle behavior in the similar external environment extracted in the processing step S940 in FIG. 9, and includes the data D15 indicative of the acceleration of the vehicle traveling straight ahead. The output data D5 further includes the ID (D11) indicative of the data sequence and the time information (D12: ms).

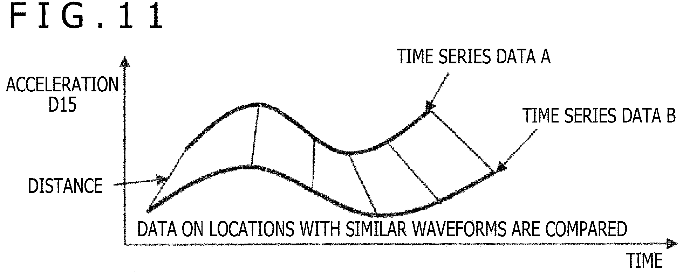

The existing driving data D5 in the similar external environment and the previously processed driving data D4 constitute the input data to the abnormal state detection section 170. The abnormal state display data D6 is the output data from the abnormal state detection section 170. The concept of the abnormal state detection section 170 is explained below with reference to FIG. 11. In FIG. 11, the horizontal axis stands for time and the vertical axis denotes the acceleration D15.

FIG. 11 depicts the case in which the input data to the abnormal state detection section 170 is the acceleration D15 of the behavior at the time of activating the vehicle brakes. Time series data A is the acceleration D15 of test data as the previously processed driving data D4. Time series data B is the acceleration D15 as the existing driving data D5 in the similar external environment. The distance between the acceleration of the time series data A and that of the time series data B having a similar waveform is calculated to obtain a numerical "degree of abnormality" indicative of how severe the abnormality is. The technique for calculating the degree of abnormality explained in Non-Patent Document 1 may be adopted here.

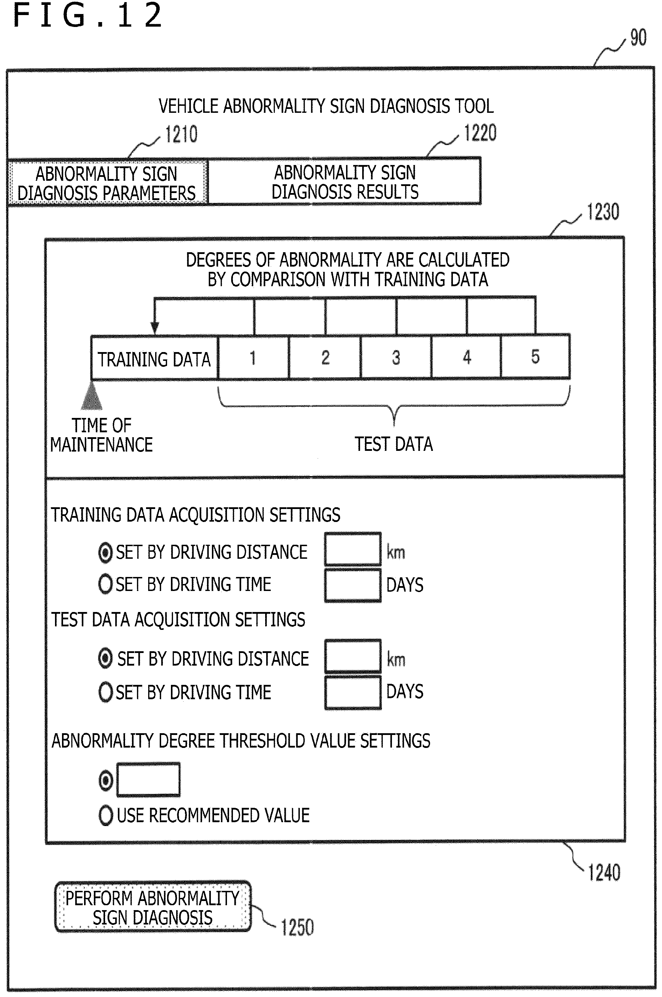

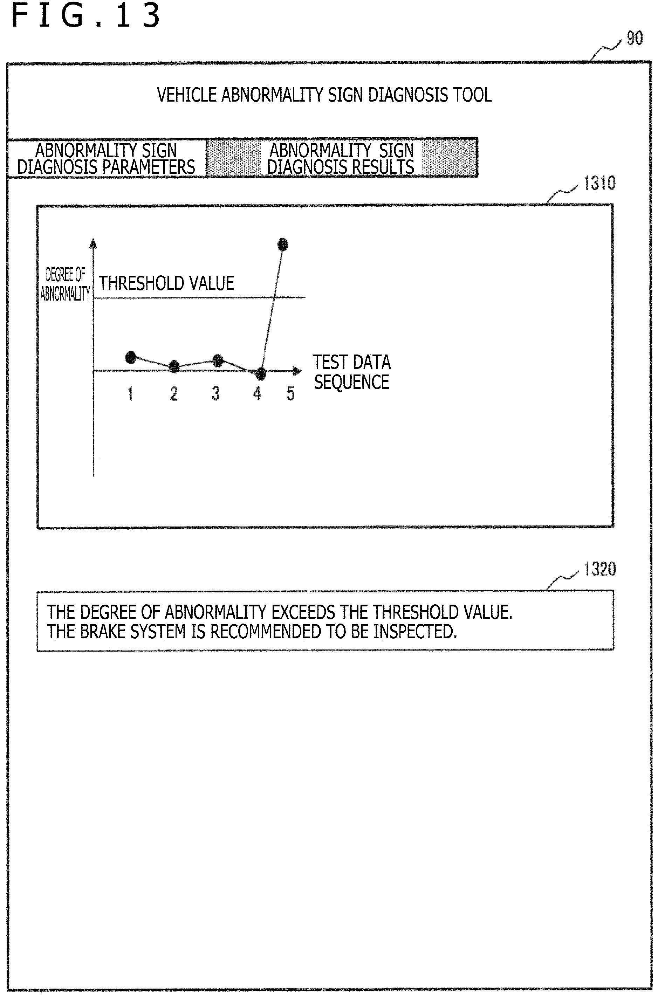

FIGS. 12 and 13 depict an example of an input screen 90 of the vehicle abnormality sign diagnosis tool. Although the input screen 90 of the vehicle abnormality sign diagnosis tool is explained to be configured here using the mobile information terminal located in the vehicle interior, the vehicle abnormality sign diagnosis tool may be configured anywhere desired.

In this case, the vehicle abnormality sign diagnosis tool is started by use of the mobile information terminal. An example of a started input screen 90 appears as illustrated in FIGS. 12 and 13. The screen is titled "vehicle abnormality sign diagnosis tool." The input screen 90 has two tabs: "abnormality sign diagnosis parameters 1210," and "abnormality sign diagnosis results 1220." Pressing the "abnormality sign diagnosis parameters 1210" tab displays the screen in FIG. 12. Pressing the "abnormality sign diagnosis results 1220" tab displays the screen in FIG. 13.

The display in FIG. 12 is roughly configured with an overall display area 1230, a parameter setting display area 1240, and a diagnosis execution display area 1250 of the method for this apparatus.

Of these areas, the overall display area 1230 displays the degree of abnormality calculated by comparison with the training data. The time of maintenance here denotes the point in time immediately following maintenance of the vehicle at the maintenance factory. At this time, the state of the vehicle is assumed to be normal. After this time, driving data is acquired over a predetermined driving distance or following a predetermined driving time as the training data. The driving data acquired subsequent to the predetermined driving distance or driving time is referred to as test data. The driving distance or driving time for acquisition of the test data is set independently of the training data.

In the parameter setting display area 1240, the items of training data acquisition settings, test data acquisition settings, and abnormality degree threshold value settings are each displayed with selectable and settable settings. The training data acquisition settings offer two options: "set by driving distance" in km, and "set by driving time" in days. Likewise, the test data acquisition settings offer "set by driving distance" and "set by driving time" options. The abnormality degree threshold value settings have two options: set by numerical input, and "use recommended value."

The diagnosis execution display area 1250 is provided with a "perform abnormality sign diagnosis" button. After parameters are input to the parameter setting display area 1240 and the "perform abnormality sign diagnosis" button is pressed, the acquisition of driving data and the abnormality sign diagnosis are started.

The screen display of the "abnormality sign diagnosis results 1220" tab depicted in FIG. 13 is roughly configured with an abnormality degree display area 1310 and an alarm area 1320.

The abnormality degree display area 1310 provides a graphic representation. The horizontal axis stands for test data sequence and vertical axis denotes degrees of abnormality. This area displays calculated degrees of abnormality of the test data. The threshold value set by the abnormality sign diagnosis parameter tab is displayed as a horizontal line. The test data threshold value is displayed in green when not exceeded and in red when exceeded. Although the present embodiment uses the colors of green and red for the threshold value display, other colors may be used instead.

In addition, in the case where the degree of abnormality exceeds the threshold value, the alarm area 1320 displays a message "The degree of abnormality exceeds the threshold value. The brake system is recommended to be inspected." The specific wording of the message here is an example. Some other suitable wording of the alarm may be adopted instead. As another alternative, the alarm may be replaced with "recommendations."

Second embodiment

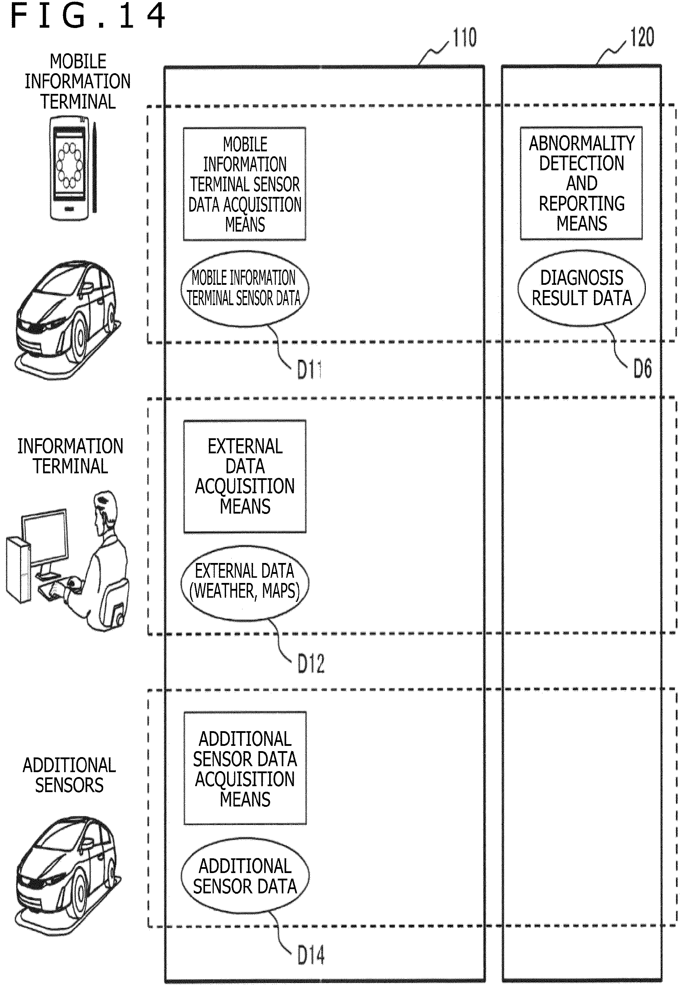

In a second embodiment, the external input section 110 and the external output section 120 in FIG. 3 are configured differently. The newly configured sections are explained below with reference to FIG. 14.

In FIG. 14, the external input section 110 is newly provided with additional sensor data acquisition means in addition to the mobile information terminal sensor data acquisition means and the external data acquisition means. Physically, additional sensors are installed in the vehicle. Additional sensor data D14 is acquired from the additional sensors thus installed.

In the case where the abnormality sign diagnosis is performed on the brake system of the vehicle, a brake pedal force sensor and a brake pedal depression amount sensor may be used as the additional sensors. If the additional sensor data D14 acquired from the brake pedal force sensor or from the brake pedal depression amount sensor is used as the input to the brake system and the acceleration of the vehicle behavior is given as the output, then the relationship between the input and the output permits execution of the abnormality sign diagnosis on the brake system.

In the above-described first and second embodiments, the brake operation is discussed as an example in carrying out abnormality prediction. The abnormality prediction in this manner applies to other types of operations performed on the vehicle. For example, the abnormality prediction is performed by monitoring, storing, and comparing the difference between the amount of given operation performed on the vehicle by operating the parking brake, accelerator pedal, or steering wheel other than the foot brake on one hand, and the resulting state change on the other hand.

In the case of the operation other than that of the foot brake, it does not matter what models are prepared in the operation database DB or how to determine specific processes to be performed by the data processing section 150 using specific operation amounts. The point is that the data processing section 150 need only extract the operating period of a given operation performed on the vehicle and exclude the data other than that of normal operation, or need only select and evaluate the data in the similar environment for comparison purposes.

Examples are described above in which the vehicle is the target for control. Alternatively, the control target may be extended to general equipment.

The present invention is characterized in that the data regarding the normally operating vehicle as the equipment to be controlled is targeted for comparison and that the cases similar to the surrounding environment and status of the vehicle in driving are selected for comparison therebetween.

Reference Signs List

DB: Operation database
100: Vehicle abnormality sign diagnosis apparatus
110: Input section
120: Output section
130: Data detection section
150: Data processing section
151: Braking period extraction means
152: Parking/stopping data exclusion means
153: Vehicle straight-ahead travel data extraction means
154: Road gradient calculation means
160: Similar external environment detection section
170: Abnormal state detection section

**Claims**

1. An abnormality sign diagnosis apparatus configured to use measurement data on equipment including a vehicle in operation to find a difference between previously acquired data on the equipment in normal operation and the measurement data on the equipment at a time targeted for diagnosis so as to detect abnormality of the equipment, the abnormality sign diagnosis apparatus comprising:

- input means (110) configured to input the measurement data on

  ◦ the equipment in operation and a surrounding environment and
  ◦ status of the equipment in operation;

- storage means (DB) configured to store the data on the equipment in normal operation; and
- processing means (150) configured to select from the storage means the data on the equipment in normal operation in a surrounding environment and status of the equipment, the surrounding environment and the status being similar to the surrounding environment and the status of the equipment at a time which is targeted for diagnosis and at which the data on the equipment in normal operation has been measured, wherein the surrounding environment and the status of the vehicle in driving are identified in such a manner that from the data on the equipment in normal driving, normal driving data in similar status is selected for use in abnormality detection, the processing means (100) being further configured to detect abnormality of the equipment using the data on the equipment in normal operation at the time targeted for diagnosis and the data on the equipment in normal operation selected from the storage means,

**characterized in that** the surrounding environment of the equipment in operation includes multiple external environment elements other than the vehicle behavior to be evaluated including information regarding weather at a location of the equipment, information regarding weather including time, weather, temperature, and humidity, and the processing means is configured to

  ◦ calculate a degree of similarity between the surrounding environment of previously processed driving data and the surrounding environment of the equipment in operation, wherein the degree of similarity includes weighting the external environment elements in accordance with the degrees of their influence on the vehicle behavior to be evaluated and
  ◦ select, as the data on the equipment in normal operation, the data with the most similar external environment information.

2. The abnormality sign diagnosis apparatus according to claim 1, wherein
the surrounding environment and the status of the vehicle in driving are identified using information acquired by a mobile information terminal.

3. The abnormality sign diagnosis apparatus according to claim 1, wherein
the surrounding environment and the status of the vehicle in driving are identified using information acquired by a mobile information terminal as well as by a vehicle-mounted sensor.

4. The abnormality sign diagnosis apparatus according to any one of claims 1 to 3, wherein
the measurement data on the equipment in operation is obtained from a state brought about by operation of at least one of a brake pedal, a steering wheel, and an accelerator pedal of the vehicle.

5. The abnormality sign diagnosis apparatus according to any one of claims 1 to 4, wherein
the surrounding environment and the status of the vehicle in driving are identified using velocity, acceleration, and location information acquired by a mobile information terminal regarding the vehicle, the identified surrounding environment and status of the vehicle in driving being used for detecting abnormality of a brake system of the vehicle.

6. The abnormality sign diagnosis apparatus according to any one of claims 1 to 5, wherein
the processing means stores, given the measurement data acquired consecutively, the measurement data on the equipment in a period in which the equipment is operated by a given amount, as the data on the equipment in normal operation.

7. An abnormality sign diagnosis method that uses measurement data on equipment including a vehicle in operation to find a difference between previously acquired data on the equipment in normal operation and the measurement data on the equipment at a time targeted for diagnosis so as to detect abnormality of the equipment, the abnormality sign diagnosis method comprising:

by processing means,
obtaining the measurement data on the equipment in operation and a surrounding environment and status of the equipment in operation;
storing the data on the equipment in normal operation; and

- using the data on the equipment in normal operation at a time targeted for diagnosis and previously stored data on the equipment in normal operation in a surrounding environment and status of the equipment, the surrounding environment and the status being similar to the surrounding environment and the status of the equipment at the time at which the data on the equipment in normal operation has been measured, so as to detect abnormality of the equipment, wherein the surrounding environment and the status of the vehicle in driving are identified in such a manner that from the data on the equipment in normal driving, normal driving data in similar status is selected for use in abnormality detection, wherein the surrounding environment of the equipment in operation includes multiple external environment elements other than the vehicle behavior to be evaluated including information regarding weather at a location of the equipment, information regarding weather including time, weather, temperature, and humidity, and the method includes

  ∘ calculating a degree of similarity between the surrounding environment of previously processed driving data and the surrounding environment of the equipment in operation, wherein the degree of similarity includes weighting the external environment elements in accordance with the degrees of their influence on the vehicle behavior to be evaluated and
  ∘ selecting, as the previously stored data on the equipment in normal operation, the data with the most similar external environment information .

**Patentansprüche**

1.  Abnormalitätssignal-Diagnosevorrichtung, dazu ausgelegt ist, Messdaten von Ausrüstung, inklusive eines Fahrzeugs, im Betrieb zu verwenden, um einen Unterschied zwischen zuvor erfassten Daten der Ausrüstung im normalen Betrieb und den Messdaten der Ausrüstung zu einem für die Diagnose anvisierten Zeitpunkt zu finden, um so eine Abnormalität der Ausrüstung zu detektieren, wobei die Abnormalitätssignal-Diagnosevorrichtung umfasst:

    - Eingabemittel (110), die dazu ausgeleg sind, die Messdaten der Ausrüstung im Betrieb und eine Umgebung und einen Zustand der Ausrüstung im Betrieb einzugeben;
    - Speichermittel (DB), die dazu ausgelegt sind, die Daten der Ausrüstung im normalen Betrieb zu speichern; und
    - Verarbeitungsmittel (150), die dazu ausgelegt sind, aus den Speichermitteln die Daten der Ausrüstung im normalen Betrieb in einer Umgebung und einem Zustand der Ausrüstung auszuwählen, wobei die Umgebung und der Zustand ähnlich der Umgebung und dem Zustand der Ausrüstung zu einem Zeitpunkt sind, der für die Diagnose anvisiert ist und zu dem die Daten der Ausrüstung im normalen Betrieb gemessen wurden,

    wobei die Umgebung und der Zustand des Fahrzeugs beim Fahren in einer solchen Weise identifiziert werden, dass aus den Daten der Ausrüstung beim normalen Fahren normale Fahrdaten in ähnlichem Zustand für die Verwendung bei der Abnormalitätsdetektion ausgewählt werden, wobei die Verarbeitungsmittel (100) ferner konfiguriert sind, eine Abnormalität der Ausrüstung unter Verwendung der Daten der Ausrüstung im normalen Betrieb zum für die Diagnose anvisierten Zeitpunkt und der aus den Speichermitteln ausgewählten Daten der Ausrüstung im normalen Betrieb zu detektieren, **dadurch gekennzeichnet, dass** die Umgebung der Ausrüstung im Betrieb mehrere externe Umgebungselemente außer dem zu bewertenden Fahrzeugverhalten umfasst, insbesondere Informationen bezüglich des Wetters an einem Standort der Ausrüstung, Informationen bezüglich des Wetters inklusive der Zeit, dem Wetter, der Temperatur und der Feuchtigkeit, und die Verarbeitungsmittel konfiguriert sind,

    einen Ähnlichkeitsgrad zwischen der Umgebung zuvor verarbeiteter Fahrdaten und der Umgebung der Ausrüstung im Betrieb zu berechnen, wobei der Ähnlichkeitsgrad eine Gewichtung der externen Umgebungselemente entsprechend den Graden ihres Einflusses auf das zu bewertende Fahrzeugverhalten umfasst, und als die Daten der Ausrüstung im normalen Betrieb die Daten mit den ähnlichsten externen Umgebungsinformationen auszuwählen.

2.  Abnormalitätssignal-Diagnosevorrichtung nach Anspruch 1, wobei
die Umgebung und der Zustand des Fahrzeugs beim Fahren unter Verwendung von Informationen identifiziert werden, die von einem mobilen Informationsterminal erfasst werden.

**3.** Abnormalitätssignal-Diagnosevorrichtung nach Anspruch 1, wobei
die Umgebung und der Zustand des Fahrzeugs beim Fahren unter Verwendung von Informationen identifiziert werden, die von einem mobilen Informationsterminal sowie von einem fahrzeugmontierten Sensor erfasst werden.

**4.** Abnormalitätssignal-Diagnosevorrichtung nach einem der Ansprüche 1 bis 3, wobei
die Messdaten der Ausrüstung im Betrieb aus einem Zustand erhalten werden, der durch den Betrieb mindestens eines von einem Bremspedal, einem Lenkrad und einem Gaspedal des Fahrzeugs herbeigeführt wird.

**5.** Abnormalitätssignal-Diagnosevorrichtung nach einem der Ansprüche 1 bis 4, wobei
die Umgebung und der Zustand des Fahrzeugs beim Fahren unter Verwendung von Geschwindigkeits-, Beschleunigungs- und Standortinformationen identifiziert werden, die von einem mobilen Informationsterminal bezüglich des Fahrzeugs erfasst werden, wobei die identifizierte Umgebung und der Zustand des Fahrzeugs beim Fahren zur Detektion einer Abnormalität eines Bremssystems des Fahrzeugs verwendet werden.

**6.** Abnormalitätssignal-Diagnosevorrichtung nach einem der Ansprüche 1 bis 5, wobei
die Verarbeitungsmittel bei gegebenen konsekutiv erfassten Messdaten die Messdaten der Ausrüstung in einem Zeitraum speichern, in dem die Ausrüstung um einen gegebenen Betrag betrieben wird, als die Daten der Ausrüstung im normalen Betrieb.

**7.** Abnormalitätssignal-Diagnoseverfahren, das Messdaten an Ausrüstung, inklusive eines Fahrzeugs, im Betrieb verwendet, um einen Unterschied zwischen zuvor erfassten Daten der Ausrüstung im normalen Betrieb und den Messdaten der Ausrüstung zu einem für die Diagnose anvisierten Zeitpunkt zu finden, um so eine Abnormalität der Ausrüstung zu detektieren, wobei das Abnormalitätssignal-Diagnoseverfahren umfasst:

- Erhalten der Messdaten der Ausrüstung im Betrieb und einer Umgebung und eines Zustands der Ausrüstung im Betrieb;
- Speichern der Daten der Ausrüstung im normalen Betrieb; und
- Verwenden der Daten der Ausrüstung im normalen Betrieb zu einem für die Diagnose anvisierten Zeitpunkt und zuvor gespeicherter Daten der Ausrüstung im normalen Betrieb in einer Umgebung und einem Zustand der Ausrüstung, wobei die Umgebung und der Zustand ähnlich der Umgebung und dem Zustand der Ausrüstung zu dem Zeitpunkt sind, zu dem die Daten der Ausrüstung im normalen Betrieb gemessen wurden, um so eine Abnormalität der Ausrüstung zu detektieren,
durch Verarbeitungsmittel, wobei
die Umgebung und der Zustand des Fahrzeugs beim Fahren in einer solchen Weise identifiziert werden, dass aus den Daten der Ausrüstung beim normalen Fahren normale Fahrdaten in ähnlichem Zustand für die Verwendung bei der Abnormalitätsdetektion ausgewählt werden, wobei
die Umgebung der Ausrüstung im Betrieb mehrere externe Umgebungselemente außer dem zu bewertenden Fahrzeugverhalten umfasst, insbesondere Informationen bezüglich des Wetters an einem Standort der Ausrüstung, Informationen bezüglich des Wetters einschließlich Zeit, Wetter, Temperatur und Feuchtigkeit, und das Verfahren umfasst

- Berechnen eines Ähnlichkeitsgrads zwischen der Umgebung zuvor verarbeiteter Fahrdaten und der Umgebung der Ausrüstung im Betrieb, wobei der Ähnlichkeitsgrad eine Gewichtung der externen Umgebungselemente entsprechend den Graden ihres Einflusses auf das zu bewertende Fahrzeugverhalten umfasst, und
- Auswählen als die zuvor gespeicherten Daten der Ausrüstung im normalen Betrieb der Daten mit den ähnlichsten externen Umgebungsinformationen.

## Revendications

**1.** Appareil de diagnostic de signes d'anomalie configuré pour utiliser des données de mesure sur un équipement incluant un véhicule en opération pour trouver une différence entre des données précédemment acquises sur l'équipement en opération normale et les données de mesure sur l'équipement à un moment ciblé pour un diagnostic de façon à détecter une anomalie de l'équipement, l'appareil de diagnostic de signes d'anomalie comprenant :

- un moyen (110) d'entrée configuré pour entrer les données de mesure sur

◦ l'équipement en opération et un environnement immédiat et
◦ un statut de l'équipement en opération ;

- un moyen (DB) de stockage configuré pour stocker les données sur l'équipement en opération normale ; et
- un moyen (150) de traitement configuré pour sélectionner dans le moyen de stockage les données sur l'équipement en opération normale dans un environnement immédiat et un statut de l'équipement, l'environnement immédiat et le statut étant similaires à l'environnement immédiat et au statut de l'équipement à un moment qui est ciblé pour un diagnostic et auquel les données sur l'équipement en opération normale ont été mesurées, dans lequel l'environnement immédiat et le statut du véhicule en déplacement sont identifiés de telle façon que, à partir des données sur l'équipement en déplacement normal, des données de déplacement normal dans un statut similaire sont sélectionnées pour une utilisation dans une détection d'anomalie, le moyen (100) de traitement étant en outre configuré pour détecter une anomalie de l'équipement en utilisant les données sur l'équipement en opération normale au moment ciblé pour un diagnostic et les données sur l'équipement en opération normale sélectionnées dans le moyen de stockage,

**caractérisé en ce que** l'environnement immédiat de l'équipement en opération inclut des éléments environnementaux externes multiples autres que le comportement de véhicule devant être évalué, incluant des informations concernant la météorologie à un emplacement de l'équipement, des informations concernant la météorologie incluant l'heure, la météorologie, la température, et l'humidité, et le moyen de traitement est configuré pour

◦ **calculer** un degré de similarité entre l'environnement immédiat de données de déplacement précédemment traitées et l'environnement immédiat de l'équipement en opération, dans lequel le degré de similarité inclut une pondération des éléments environnementaux externes conformément aux degrés de leur influence sur le comportement de véhicule devant être évalué et
◦ sélectionner, comme les données sur l'équipement en opération normale, les données avec les informations environnementales externes les plus similaires.

2. Appareil de diagnostic de signes d'anomalie selon la revendication 1, dans lequel l'environnement immédiat et le statut du véhicule en déplacement sont identifiés en utilisant des informations acquises par un terminal d'information mobile.

3. Appareil de diagnostic de signes d'anomalie selon la revendication 1, dans lequel l'environnement immédiat et le statut du véhicule en déplacement sont identifiés en utilisant des informations acquises par un terminal d'information mobile ainsi que par un capteur embarqué dans le véhicule.

4. Appareil de diagnostic de signes d'anomalie selon l'une quelconque des revendications 1 à 3, dans lequel les données de mesure sur l'équipement en opération sont obtenues à partir d'un état amené par une opération d'au moins un(e) parmi une pédale de frein, un volant, et une pédale d'accélérateur du véhicule.

5. Appareil de diagnostic de signes d'anomalie selon l'une quelconque des revendications 1 à 4, dans lequel l'environnement immédiat et le statut du véhicule en déplacement sont identifiés en utilisant des informations de vitesse, d'accélération et de localisation acquises par un terminal d'information mobile concernant le véhicule, l'environnement immédiat et le statut du véhicule en déplacement identifiés étant utilisés pour détecter une anomalie d'un système de freinage du véhicule.

6. **Appareil** de diagnostic de signes d'anomalie selon l'une quelconque des revendications 1 à 5, dans lequel le moyen de traitement stocke, compte tenu des données de mesure acquises consécutivement, les données de mesure sur l'équipement sur une période pendant laquelle l'équipement est opéré d'une quantité donnée, comme les données sur l'équipement en opération normale.

7. Procédé de diagnostic de signes d'anomalie qui utilise des données de mesure sur un équipement incluant un véhicule en opération pour trouver une différence entre des données précédemment acquises sur l'équipement en opération normale et les données de mesure sur l'équipement à un moment ciblé pour un diagnostic de façon à détecter une anomalie de l'équipement, le procédé de diagnostic de signes d'anomalie comprenant :

par un moyen de traitement,
l'obtention des données de mesure sur l'équipement en opération et un environnement immédiat et un statut de l'équipement en opération ;

le stockage des données sur l'équipement en opération normale ; et

- l'utilisation des données sur l'équipement en opération normale à un moment ciblé pour un diagnostic et de données précédemment stockées sur l'équipement en opération normale dans un environnement immédiat et un statut de l'équipement, l'environnement immédiat et le statut étant similaires à l'environnement immédiat et au statut de l'équipement au moment auquel les données sur l'équipement en opération normale ont été mesurées, de façon à détecter une anomalie de l'équipement, dans lequel l'environnement immédiat et le statut du véhicule en déplacement sont identifiés de telle façon que, à partir des données sur l'équipement en déplacement normal, des données de déplacement normal dans un statut similaire sont sélectionnées pour utilisation dans une détection d'anomalie, dans lequel l'environnement immédiat de l'équipement en opération inclut des éléments environnementaux externes multiples autres que le comportement de véhicule devant être évalué, incluant des informations concernant la météorologie à un emplacement de l'équipement, des informations concernant la météorologie incluant l'heure, la météorologie, la température, et l'humidité, et le procédé inclut

◦ le calcul d'un degré de similarité entre l'environnement immédiat de données de déplacement précédemment traitées et l'environnement immédiat de l'équipement en opération, dans lequel le degré de similarité inclut une pondération des éléments environnementaux externes conformément aux degrés de leur influence sur le comportement de véhicule devant être évalué et
◦ la sélection, comme les données précédemment stockées sur l'équipement en opération normale, des données avec les informations environnementales externes les plus similaires.

# FIG.1

DATA CENTER 100

DATA DETECTION SECTION 130

DATA PROCESSING SECTION 150

INPUT SECTION 110

NETWORK N

BRAKING PERIOD EXTRACTION MEANS 151

DB

OPERATION DATABASE

PARKING/ STOPPING DATA EXCLUSION MEANS 152

OUTPUT SECTION 120

NETWORK N

SIMILAR EXTERNAL ENVIRONMENT DETECTION SECTION 160

VEHICLE STRAIGHT-AHEAD TRAVEL DATA EXTRACTION MEANS 153

ROAD GRADIENT CALCULATION MEANS 154

ABNORMAL STATE DETECTION SECTION 170

# F I G . 2

ABNORMALITY SIGN DIAGNOSIS APPARATUS — 100

D11 — MOBILE INFORMATION TERMINAL SENSOR DATA

D12 — NETWORK DATA (WEATHER, MAPS)

130 — DATA DETECTION SECTION

D0 — MOBILE TERMINAL AND NETWORK DATA (FIG. 4)

150 — DATA PROCESSING SECTION

151 — BRAKING PERIOD EXTRACTION MEANS

152 — PARKING/ STOPPING DATA EXCLUSION MEANS

153 — VEHICLE STRAIGHT-AHEAD TRAVEL DATA EXTRACTION MEANS

154 — ROAD GRADIENT CALCULATION MEANS

(FIG. 7)

DB — TRAVEL PHYSICAL MODEL EMPIRICAL MODEL MOTION EQUATION VEHICLE TYPE INFORMATION

160 — SIMILAR EXTERNAL ENVIRONMENT DETECTION SECTION (FIG. 9)

D5 — EXISTING DRIVING DATA IN SIMILAR EXTERNAL ENVIRONMENT (FIG. 10)

D4 — PREVIOUSLY PROCESSED DRIVING DATA (FIG. 8)

170 — ABNORMAL STATE DETECTION SECTION

D6 — ABNORMAL STATE DISPLAY DATA

# FIG.3

MOBILE INFORMATION
TERMINAL

~110

~120

MOBILE INFORMATION
TERMINAL SENSOR
DATA ACQUISITION
MEANS

MOBILE INFORMATION
TERMINAL SENSOR DATA

ABNORMALITY
DETECTION AND
REPORTING MEANS

DIAGNOSIS
RESULT DATA

D11

D6

INFORMATION
TERMINAL

NETWORK DATA
ACQUISITION
MEANS

NETWORK DATA
(WEATHER, MAPS)

D12

## F I G . 4

D0

VELOCITY, ACCELERATION, AND GPS

D1

| ID | TIME (ms) | VELOCITY X (km/h) | VELOCITY Y (km/h) | ACCELERATION X (m/s²) | ACCELERATION Y (m/s²) | X COORDINATE (m) | Y COORDINATE (m) |
|---|---|---|---|---|---|---|---|
| | D11 | D12 | D13 | D14 | D15 | D16 | D17 | D18 |
| 1 | 0 | 39.9 | 0.1 | 0.12 | 0.03 | 39.03 | 360.32 |
| 2 | 50 | 39.7 | 0.1 | 0.13 | 0.03 | 40.12 | 360.52 |

D11

MAP INFORMATION

D2

| X COORDINATE (m) | Y COORDINATE (m) | Z COORDINATE (m) |
|---|---|---|
| D21 | D22 | D23 |
| 39.03 | 360.32 | 35.33 |
| 40.12 | 360.52 | 35.36 |

D12

WEATHER INFORMATION

D3

| TIME | WEATHER | TEMPERATURE (°C) | HUMIDITY (%) |
|---|---|---|---|
| D31 | D32 | D33 | D34 |
| 13:00, JANUARY 10 | RAIN | 18 | 60 |
| 14:00, JANUARY 10 | RAIN | 19 | 65 |

EP 3 812 218 B1

# FIG.5

# FIG.6

# FIG.7

```
                    ┌──────────────┐
                    │    Start     │
                    └──────────────┘
                           │
                           ▼           ╱ S710
        ┌──────────────────────────────┐
        │   EXTRACT BRAKING PERIOD BY   │
        │  COMPARISON WITH PREVIOUSLY   │
        │    PREPARED EMPIRICAL MODEL   │
        └──────────────────────────────┘
                           │
                           ▼           ╱ S720
        ┌──────────────────────────────┐
        │    EXTRACT VEHICLE STRAIGHT-AHEAD    │
        │ TRAVEL DATA UPON DETERMINATION BASED │
        │  ON LATERAL VELOCITY AND ACCELERATION│
        └──────────────────────────────┘
                           │
                           ▼           ╱ S730
        ┌──────────────────────────────┐
        │    EXCLUDE PARKING/STOPPING   │
        │     DATA BY SEARCHING FOR     │
        │  LOCATIONS AT ZERO VELOCITY   │
        └──────────────────────────────┘
                           │
                           ▼           ╱ S740
        ┌──────────────────────────────┐
        │ CALCULATE ROAD GRADIENT BY COMPUTING │
        │ HEIGHT USING BOTH XY COORDINATES OF  │
        │ GPS INFORMATION AND MAP INFORMATION  │
        └──────────────────────────────┘
                           │
                           ▼
                    ┌──────────────┐
                    │     End      │
                    └──────────────┘
```

# FIG.8

D4

| ID | TIME (ms) | VELOCITY X (km/h) | ACCELERATION X (m/s²) | ROAD GRADIENT (°C) | WEATHER | TEMPERATURE (°C) | HUMIDITY (%) | BRAKES |
|----|-----------|-------------------|-----------------------|--------------------|---------|------------------|--------------|--------|
| 1 | 0 | 39.9 | 0.12 | 3 | RAIN | 18 | 60 | On |
| 2 | 50 | 39.7 | 0.13 | 3.5 | RAIN | 19 | 65 | Off |

D11  D12  D13  D15  D41  D32  D33  D34  D42

# FIG.9

# FIG.10

| | D11 | D12 | D15 | D5 |

| ID | TIME (ms) | ACCELERATION (m/s$^2$) |
|---|---|---|
| 1 | 0 | 0.12 |
| 2 | 50 | 0.13 |

# FIG.11

# FIG.12

90

## VEHICLE ABNORMALITY SIGN DIAGNOSIS TOOL

1210

1220

| ABNORMALITY SIGN DIAGNOSIS PARAMETERS | ABNORMALITY SIGN DIAGNOSIS RESULTS |
|---|---|

1230

### DEGREES OF ABNORMALITY ARE CALCULATED BY COMPARISON WITH TRAINING DATA

| TRAINING DATA | 1 | 2 | 3 | 4 | 5 |
|---|---|---|---|---|---|

TIME OF MAINTENANCE

TEST DATA

TRAINING DATA ACQUISITION SETTINGS

◉ SET BY DRIVING DISTANCE ☐ km

○ SET BY DRIVING TIME ☐ DAYS

TEST DATA ACQUISITION SETTINGS

◉ SET BY DRIVING DISTANCE ☐ km

○ SET BY DRIVING TIME ☐ DAYS

ABNORMALITY DEGREE THRESHOLD VALUE SETTINGS

◉ ☐

○ USE RECOMMENDED VALUE

1240

| PERFORM ABNORMALITY SIGN DIAGNOSIS |
|---|

1250

# FIG.13

90

VEHICLE ABNORMALITY SIGN DIAGNOSIS TOOL

| ABNORMALITY SIGN DIAGNOSIS PARAMETERS | ABNORMALITY SIGN DIAGNOSIS RESULTS |
|---|---|

1310

DEGREE OF ABNORMALITY | THRESHOLD VALUE

TEST DATA SEQUENCE

1  2  3  4  5

1320

THE DEGREE OF ABNORMALITY EXCEEDS THE THRESHOLD VALUE.
THE BRAKE SYSTEM IS RECOMMENDED TO BE INSPECTED.

24

# FIG.14

MOBILE
INFORMATION
TERMINAL

INFORMATION
TERMINAL

ADDITIONAL
SENSORS

~ 110

~ 120

MOBILE
INFORMATION
TERMINAL SENSOR
DATA ACQUISITION
MEANS

MOBILE INFORMATION
TERMINAL SENSOR DATA

D11

EXTERNAL
DATA
ACQUISITION
MEANS

EXTERNAL DATA
(WEATHER, MAPS)

D12

ADDITIONAL
SENSOR DATA
ACQUISITION
MEANS

ADDITIONAL
SENSOR DATA

D14

ABNORMALITY
DETECTION
AND
REPORTING
MEANS

DIAGNOSIS
RESULT DATA

D6

## REFERENCES CITED IN THE DESCRIPTION

### Patent documents cited in the description

- WO 2017160201 A
- US 2007260374 A
- US 2017358154 A1
- US 2012065834 A1
- JP 2010137644 A

### Non-patent literature cited in the description

- **TSUYOSHI IDE**. Abnormality Detection using Machine Learning. CORONA PUBLISHING CO.,LTD., August 2014